# EUROPÄISCHE PATENTSCHRIFT

(11) **EP 3 321 520 B1**
(45) Veröffentlichungstag und Bekanntmachung des Hinweises auf die Patenterteilung: **31.07.2019**
(21) Anmeldenummer: 17195957.0
(22) Anmeldetag: 11.10.2017
(51) Int. Cl.: F16B 5/06

(54) **ANSCHLUSSVORRICHTUNG UND RAHMENANORDNUNG ZUM ANSCHLUSS EINES FLEXIBLEN FLÄCHENELEMENTS**
CONNECTION DEVICE AND FRAME ASSEMBLY FOR ATTACHMENT OF A FLEXIBLE SURFACE ELEMENT
DISPOSITIF DE RACCORDEMENT ET AGENCEMENT DE CHÂSSIS PERMETTANT DE RACCORDER UN ÉLÉMENT DE SURFACE FLEXIBLE

(30) Priorität: 14.11.2016 DE 102016121738
(43) Veröffentlichungstag der Anmeldung: 16.05.2018
(73) Patentinhaber: SIGN-WARE GmbH & Co. KG, 59846 Sundern (DE)
(72) Erfinder: Vollmer, Gerd, 59846 Sundern (DE)
(74) Vertreter: Patentanwälte Dörner & Kötter PartG mbB

(56) Entgegenhaltungen:
- AU-B4- 2013 100 504
- JP-A- 2016 089 484
- US-A- 956 240

## Beschreibung

Die vorliegende Erfindung betrifft eine Anschlussvorrichtung zum Anschluss eines flexiblen Flächenelements, insbesondere eines bedruckten Textils oder einer bedruckten Plane, umfassend ein Rahmenprofil, das an einer Wand oder einem anderen Tragwerk festlegbar ist und zumindest eine erste Aufnahmenut aufweist, in der das flexible Flächenelement an dem Rahmenprofil festlegbar ist. Darüber hinaus betrifft die vorliegende Erfindung eine Rahmenanordnung zum Anschluss eines flexiblen Flächenelements, insbesondere eines bedruckten Textils oder einer bedruckten Plane, umfassend eine Mehrzahl miteinander verbundener Anschlussvorrichtungen.

Aus dem Stand der Technik ist es bekannt, ein flexibles Flächenelement, wie zum Beispiel ein bedrucktes Textil oder eine bedruckte Plane, mit Hilfe von Kedern oder Ösen, die an Randabschnitten des Flächenelements angebracht sind, an einer Rahmenanordnung, die mehrere miteinander verbundene Anschlussvorrichtungen aufweist, zu befestigen. Die Rahmenanordnung wird ihrerseits mit Hilfe von Befestigungsmitteln an einer Wand oder einem Tragwerk befestigt. Eine Anschlussvorrichtung mit den Merkmalen des Oberbegriffs des Anspruchs 1 ist aus US 956240 bekannt.

Die vorliegende Erfindung macht es sich zur Aufgabe, eine Anschlussvorrichtung sowie eine Rahmenanordnung der eingangs genannten Art zur Verfügung zu stellen, die eine Befestigung des flexiblen Flächenelements in alternativer Weise ermöglichen.

Diese Aufgabe wird durch eine Anschlussvorrichtung der eingangs genannten Art mit den Merkmalen des kennzeichnenden Teils des Anspruchs 1 gelöst. Hinsichtlich der Rahmenanordnung wird diese Aufgabe durch eine gattungsgemäße Rahmenanordnung mit den Merkmalen des kennzeichnenden Teils des Anspruchs 9 gelöst. Die Unteransprüche betreffen vorteilhafte Weiterbildungen der Erfindung.

Eine erfindungsgemäße Anschlussvorrichtung zeichnet sich dadurch aus, dass sie einen Einschlagkeder, der so geformt ist, dass er unter Zwischenlage eines äußeren Randabschnitts des flexiblen Flächenelements in die erste Aufnahmenut einsetzbar ist, eine Sicherungsleiste, die so geformt ist, dass sie auf den Einschlagkeder aufsetzbar ist, sowie zumindest eine Sicherungsschraube, die dazu eingerichtet ist, den Einschlagkeder mit dem darin eingeschlagenen Randabschnitt des flexiblen Flächenelements nach dem Einsetzen in die erste Aufnahmenut sowie die Sicherungsleiste nach dem Aufsetzen auf den Einschlagkeder gemeinsam zu sichern, aufweist. Der Erfindung liegt die Idee zugrunde, das flexible Flächenelement, das zum Beispiel ein bedrucktes Textil oder eine bedruckte Plane sein kann, ohne die Verwendung von Kedern oder Ösen, die an den Randabschnitten des flexiblen Flächenelements angebracht sind, an dem Rahmenprofil anzubringen. Dabei wird ein Einschlagkeder verwendet, der vorzugsweise aus Kunststoff hergestellt ist und in den einer der Randabschnitte des flexiblen Flächenelements eingeschlagen werden kann, so dass er sich von außen abschnittsweise um denjenigen Bereich des Einschlagkeders, der in die erste Aufnahmenut eingesetzt ist, herum erstreckt. Nach dem Aufsetzen der Sicherungsleiste auf den in die erste Aufnahmenut eingesetzten Einschlagkeder kann diese Anordnung mittels mindestens einer Sicherungsschraube gesichert werden. Vorzugsweise werden zu diesem Zweck jedoch mehrere Sicherungsschrauben verwendet, um einen besonders sicheren Halt zu gewährleisten. Ein Vorteil der hier beschriebenen Anschlussvorrichtung besteht darin, dass der Einschlagkeder einerseits und die Sicherungsleiste andererseits durch dieselbe(n) Sicherungsschraube(n) gesichert werden können. Die Montage des flexiblen Flächenelements an der Anschlussvorrichtung, die ihrerseits an einer Wand oder an einem anderen Tragwerk befestigbar ist, kann dadurch sehr einfach erfolgen. Die Herstellung des flexiblen Flächenelements kann ebenfalls vereinfacht werden, da dessen Randabschnitte nicht mit Kedern oder Ösen versehen werden müssen, um eine Befestigungsmöglichkeit zu schaffen.

Um einen sicheren Halt zu gewährleisten, wird in einer bevorzugten Ausführungsform vorgeschlagen, dass die mindestens eine Sicherungsschraube eine Länge aufweist, die so gewählt ist, dass sich die Sicherungsschraube in ihrer Montagesolllage durch die Sicherungsleiste, den Einschlagkeder, den Randabschnitt des flexiblen Flächenelements sowie durch mindestens eine Profilwandung des Rahmenprofils hindurch erstreckt.

Um die Montage besonders einfach zu gestalten, kann in einer vorteilhaften Ausführungsform vorgesehen sein, dass die mindestens eine Sicherungsschraube selbstbohrend ausgebildet ist. Durch die Verwendung einer oder mehrerer selbstbohrender Sicherungsschrauben kann bei der Montage auf einfache Weise eine Durchdringung der Sicherungsleiste, des Einschlagkeders und mindestens einer der Profilwandungen des Rahmenprofils erreicht werden. Entsprechende Bohrungen innerhalb der Sicherungsleiste und des Einschlagkeders sowie in mindestens einer der Profilwandungen des Rahmenprofils müssen somit nicht zwingend vorgesehen sein, wenngleich es auch grundsätzlich möglich ist, entsprechende, miteinander fluchtende Bohrungen vorzusehen, insbesondere wenn eine oder mehrere nicht selbstbohrend ausgeführte Sicherungsschrauben verwendet werden sollen.

Vorzugsweise kann sich die mindestens eine Sicherungsschraube in ihrer Montagesolllage durch einen Nutgrund der ersten Aufnahmenut hindurch erstrecken. Dieser Nutgrund kann in besonders vorteilhafter Weise eine Bohrrille aufweisen, die sich über die gesamte Länge der ersten Aufnahmenut erstreckt. Diese Bohrrille ermöglicht in besonders einfacher Weise das Durchdringen des Nutgrunds der Aufnahmenut mittels der mindestens einen Sicherungsschraube an beliebigen Positionen der Aufnahmenut.

Erfindungsgemäß weist das Rahmenprofil eine zweite Aufnahmenut auf, die unmittelbar an die erste Aufnahmenut angrenzt oder von dieser beabstandet ist, und dass die Sicherungsleiste einen Eingriffsabschnitt aufweist, der so geformt ist, dass er formschlüssig in die zweite Aufnahmenut einsetzbar ist. Der Eingriffsabschnitt der Sicherungsleiste, der bei der Montage in die zweite Aufnahmenut eingreift, ermöglicht in besonders einfacher Weise eine Vorfixierung der Sicherungsleiste an dem Rahmenprofil.

Vorzugsweise kann der Eingriffsabschnitt zwei voneinander beabstandete Federabschnitte umfassen, die so ausgebildet sind, dass sie eine Presspassung des Eingriffsabschnitts in der zweiten Aufnahmenut bewirken. Dadurch wird ein sicherer Halt des Eingriffsabschnitts in der zweiten Aufnahmenut erreicht.

Um den Halt des Eingriffsabschnitts in der zweiten Aufnahmenut weiter zu verbessern, kann in einer bevorzugten Ausführungsform vorgesehen sein, dass innerhalb der zweiten Aufnahmenut mehrere Rippen ausgebildet sind, die sich vorzugsweise über die gesamte Länge der zweiten Aufnahmenut erstrecken. Diese Rippen ermöglichen eine engere Presspassung des Eingriffsabschnitts in der zweiten Aufnahmenut.

In einer weiteren vorteilhaften Ausführungsform besteht die Möglichkeit, dass die beiden Aufnahmenuten Nutflanken aufweisen, durch die sich die mindestens eine Sicherungsschraube in ihrer Montagesolllage hindurch erstreckt. In dieser Ausführungsform kann die Sicherungsschraube die beiden Aufnahmenuten, den Eingriffsabschnitt der Sicherungsleiste, insbesondere die Federabschnitte des Eingriffsabschnitts, sowie den Einschlagkeder seitlich durchdringen.

Um den Halt des Einschlagkeders mit dem darin eingeschlagenen Randabschnitt des flexiblen Flächenelements in der ersten Aufnahmenut zu verbessern, kann in einer vorteilhaften Ausführungsform vorgesehen sein, dass innerhalb der ersten Aufnahmenut mehrere Rippen ausgebildet sind, die sich vorzugsweise über die gesamte Länge der ersten Aufnahmenut erstrecken. In diesem Zusammenhang ist es vorteilhaft, dass der Einschlagkeder in demjenigen Bereich, in dem er in die erste Aufnahmenut eingreift, eine makroskopische Rauigkeit aufweist, so dass im Vergleich zu einer glatten Oberfläche des Einschlagkeders in diesem Bereich und einer ohne Rippen ausgeführten ersten Aufnahmenut insgesamt eine engere Passung erreicht werden kann.

Eine erfindungsgemäße Rahmenanordnung zum Anschluss eines flexiblen Flächenelements, insbesondere eines bedruckten Textils oder einer bedruckten Plane, zeichnet sich dadurch aus, dass die Anschlussvorrichtungen nach einem der Ansprüche 1 bis 8 ausgeführt sind. Die erfindungsgemäße Rahmenanordnung ermöglicht eine einfache Fixierung des flexiblen Flächenelements. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Explosionsansicht einer Anschlussvorrichtung zum Anschluss eines flexiblen Flächenelements, insbesondere eines bedruckten Textils oder einer bedruckten Plane,
- Fig. 2: eine Stirnseitenansicht der Anschlussvorrichtung, wobei das flexible Flächenelement gemäß einer ersten Befestigungsvariante an der Anschlussvorrichtung befestigt ist,
- Fig. 3: eine Stirnseitenansicht der Anschlussvorrichtung, wobei das flexible Flächenelement gemäß einer zweiten Befestigungsvariante an der Anschlussvorrichtung befestigt ist,
- Fig. 4: eine perspektivische Ansicht der Anschlussvorrichtung, wobei das flexible Flächenelement gemäß einer dritten Befestigungsvariante an der Anschlussvorrichtung befestigt ist.

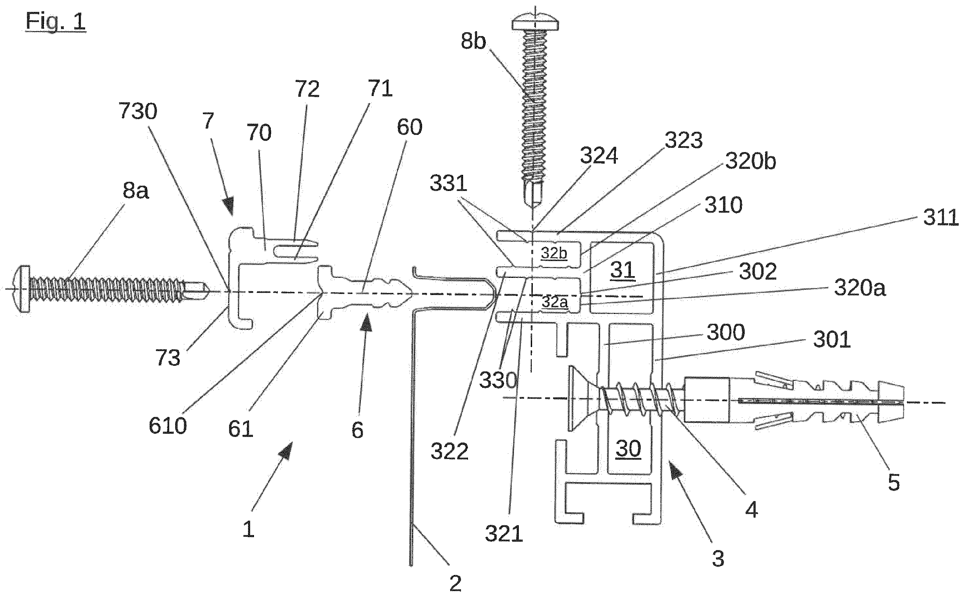

Unter Bezugnahme auf Fig. 1 umfasst eine Anschlussvorrichtung 1 zum Anschluss eines flexiblen Flächenelements 2, das insbesondere ein bedrucktes Textil oder eine bedruckte Plane sein kann, ein Rahmenprofil 3, an dem das flexible Flächenelement 2 befestigt werden kann. Das Rahmenprofil 3 kann zum Beispiel aus Aluminium hergestellt sein und insbesondere ein Aluminium-Strangpressprofil sein. Zum Zwecke des Korrosionsschutzes ist das Rahmenprofil 3 vorzugsweise eloxiert.

Das Rahmenprofil 3 weist eine erste Hohlkammer 30 auf, die sich vorzugsweise über die gesamte Länge des Rahmenprofils 3 erstreckt und eine erste Seitenwand 300 sowie eine zweite Seitenwand 301, die einander gegenüberliegen, umfasst. Das Rahmenprofil 3 weist darüber hinaus eine zweite Hohlkammer 31 auf, die unmittelbar an die erste Hohlkammer 30 angrenzt und eine erste Seitenwand 310 sowie eine zweite Seitenwand 311 aufweist. Die zweite Seitenwand 311 der zweiten Hohlkammer 31 und die zweite Seitenwand 301 der ersten Hohlkammer 30 fluchten miteinander, so dass sie einen Teil einer Anlagefläche bilden, mit der das Rahmenprofil 3 bei der Montage an einer Wand oder einem anderen geeigneten Tragwerk zur Anlage gebracht werden kann.

Um das Rahmenprofil 3 an der Wand oder dem Tragwerk befestigen zu können, sind vorzugsweise mehrere Befestigungsschrauben 4 vorgesehen, von denen in allen Figuren jeweils nur eine explizit dargestellt ist. Jede der Befestigungsschrauben 4 wird bei der Montage jeweils durch ein Paar miteinander fluchtender Bohrungen, die in den Seitenwänden 300, 301 der ersten Hohlkammer 30 ausgebildet sind, hindurchgeführt und mittels eines Dübels 5 in einer entsprechenden Bohrung der Wand beziehungsweise des Tragwerks festgelegt.

Ferner weist das Rahmenprofil 3 eine erste Aufnahmenut 32a und eine zweite Aufnahmenut 32b auf, die einen im Wesentlichen U-förmigen Querschnitt aufweisen und sich parallel zueinander über die gesamte Länge des Rahmenprofils 3 erstrecken und in diesem Ausführungsbeispiel unmittelbar aneinander angrenzen. Die beiden Aufnahmenuten 32a, 32b grenzen ihrerseits unmittelbar an die zweite Hohlkammer 31 an und weisen jeweils einen Nutgrund 320a, 320b auf, der durch die erste Seitenwand 310 der zweiten Hohlkammer 32 gebildet ist. Die erste Seitenwand 310 der zweiten Hohlkammer 31 trennt somit die beiden Aufnahmenuten 32a, 32b von der zweiten Hohlkammer 31 des Rahmenprofils 3. Die beiden Aufnahmenuten 32a, 32b werden in dem hier gezeigten Ausführungsbeispiel durch drei sich parallel zueinander erstreckende Nut-flanken 321, 322, 323 gebildet. Dabei ist eine zweite (mittlere) Nutflanke 322, die sich zwischen einer ersten Nutflanke 321 und einer dritten Nutflanke 323 erstreckt, ein Teil jeder der beiden Aufnahmenuten 32a, 32b. Die drei Nutflanken 321, 322, 323 weisen jeweils mehrere Rippen 330, 331 auf, die sich innerhalb der Aufnahmenuten 32a, 32b vorzugsweise über deren gesamte Länge erstrecken. Grundsätzlich sind auch Ausführungsformen denkbar, bei denen die beiden Aufnahmenuten 32a, 32b durch vier Nutflanken gebildet werden, wobei jede der Aufnahmenuten 32a, 32b jeweils zwei dieser Nutflanken umfasst, so dass keine der Nutflanken beiden Aufnahmenuten 32a, 32b zugeordnet werden kann und beide Aufnahmenuten 32a, 32b nicht unmittelbar (d.h. nicht ohne einen Zwischenraum) aneinander angrenzen.

Um das flexible Flächenelement 2 an der Anschlussvorrichtung 1 befestigen zu können, ist ein Einschlagkeder 6 vorgesehen, der vorzugsweise aus Kunststoff hergestellt ist. Der Einschlagkeder 6 ist einstückig ausgeführt und weist einen Basisabschnitt 60 sowie einen Kopfabschnitt 61 auf, der eine größere Breite als der Basisabschnitt 60 besitzt. Die Erstreckung des Basisabschnitts 60 ist so gewählt, dass dieser passend in die erste Aufnahmenut 32a eingesetzt werden kann. Aus Fig. 1 wird deutlich, dass der Basisabschnitt 60 an seinem freien vorderen Ende konisch ausgebildet ist und an seiner Außenseite eine makroskopische Rauigkeit besitzt.

Ein äußerer Randabschnitt 20 des flexiblen Flächenelements 2 wird bei der Montage mittels des Einschlagkeders 6 innerhalb der ersten Aufnahmenut 32a festgelegt. Dabei wird der äußere Randabschnitt 20 beim Einsetzen des Einschlagkeders 6 in die erste Aufnahmenut 32a in den Basisabschnitt 60 des Einschlagkeders 6 eingeschlagen, so dass er sich von außen um den Basisabschnitt 60 herum erstreckt. Die Rippen 330, die innerhalb der ersten Aufnahmenut 32a an den Nutflanken 321, 322 vorgesehen sind, erhöhen die Reibung und erlauben im Zusammenwirken mit der makroskopisch rauen Außenfläche des Basisabschnitts 60 des Einschlagkeders 6 im Vergleich zu einer glatten Oberfläche eine engere Passung. Nach dem Einsetzen des Einschlagkeders 6 in die erste Aufnahmenut 32a liegt der Kopf 61 des Einschlagkeders 6 an den freien Enden der ersten und zweiten Nutflanke 321, 322 an.

Um den Einschlagkeder 6 und den in diesem eingeschlagenen Randabschnitt 20 des flexiblen Flächenelements 2 innerhalb der ersten Aufnahmenut 32a zu sichern, weist die Anschlussvorrichtung 1 eine Sicherungsleiste 7 auf, die sich über die gesamte Länge des Rahmenprofils 3 erstreckt und vorzugsweise ebenfalls aus Aluminium hergestellt ist. Zum Zwecke des Korrosionsschutzes ist die Sicherungsleiste 7 vorzugsweise ebenfalls eloxiert. Die Sicherungsleiste 7 weist einen Eingriffsabschnitt 70 auf, der so geformt und dimensioniert ist, dass er formschlüssig in die zweite Aufnahmenut 32b eingesetzt werden kann. Der Eingriffsabschnitt 70 umfasst vorliegend zwei voneinander beabstandete Federabschnitte 71, 72, die mit den Rippen 331, die innerhalb der zweiten Aufnahmenut 32b an den Nutflanken 322, 323 vorgesehen sind, zusammenwirken und eine Presspassung des Eingriffsabschnitts 70 innerhalb der zweiten Aufnahmenut 32b bewirken. An den Eingriffsabschnitt 70 grenzt ein sich über die gesamte Länge der Sicherungsleiste 7 erstreckender Abdeckabschnitt 73 an, der so geformt ist, dass er nach der Montage der Sicherungsleiste 7 an einem freien Ende der dritten Nutflanke 323 anliegt und sich darüber hinaus über den Kopf 61 des Einschlagkeders 6 hinweg erstreckt und diesen vorzugsweise auch randseitig vollständig überdeckt.

Um den Einschlagkeder 6 nach dem Einsetzen in die erste Aufnahmenut 32a sowie darüber hinaus auch die Sicherungsleiste 7 nach dem Einstecken des Eingriffsabschnitts 70 in die zweite Aufnahmenut 32b an dem Rahmenprofil 3 der Anschlussvorrichtung 1 zu sichern, gibt es unterschiedliche Befestigungsvarianten, die nachfolgend näher erläutert werden sollen.

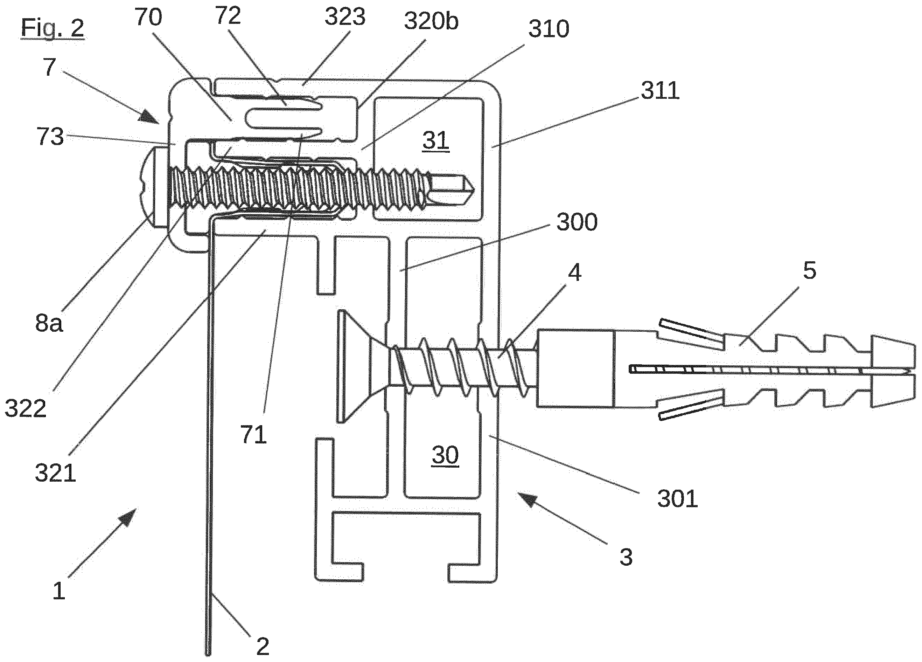

Gemäß einer ersten Befestigungsvariante, die in Fig. 2 gezeigt ist, werden ein oder mehrere Sicherungsschrauben 8a, die vorzugsweise selbstbohrend ausgeführt sind und von denen in Fig. 2 nur eine zu erkennen ist, von vorne durch den Abdeckabschnitt 73 der Sicherungsleiste 7, durch den Einschlagkeder 6 mit dem von diesem eingeschlagenen Randabschnitt 20 des flexiblen Flächenelements 2, durch den Nutgrund 320a der ersten Aufnahmenut 32 und somit auch durch die erste Seitenwand 300 der ersten Hohlkammer 30 hindurchgeführt. Jede der Sicherungsschrauben 8a hat eine entsprechend angepasste Länge, so dass sie sich in ihrer Montagesolllage durch die erste Seitenwand 300 der ersten Hohlkammer 30 in diese hinein erstreckt und damit ein optimales Festschrauben ermöglicht. Um das Festschrauben der mindestens einen Sicherungsschraube 8a zu erleichtern, weisen der Abdeckabschnitt 73 der Sicherungsleiste 7, der Kopf 61 des Einschlagkeders 6 sowie der Nutgrund 320a, der in der ersten Seitenwand 300 der ersten Hohlkammer 30 ausgebildet ist, in einem der Sicherungsschraube 8a bei der Montage zugewandten Bereich jeweils eine Bohrrille 730, 610, 302 auf. Diese drei Bohrrillen 730, 610, 302 erstecken sich vorzugsweise über die gesamte Länge der Sicherungsleiste 7, des Einschlagkeders 6 sowie über die gesamte Länge des Nutgrundes 320a der ersten Aufnahmenut 32a und fluchten miteinander, so dass die Durchbohrung der Sicherungsleiste 7, des Einschlagkeders 6 sowie des Rahmenprofils 3 mittels einer oder mehrerer Sicherungsschrauben 8a an frei wählbaren Positionen auf besonders einfache Weise erfolgen kann.

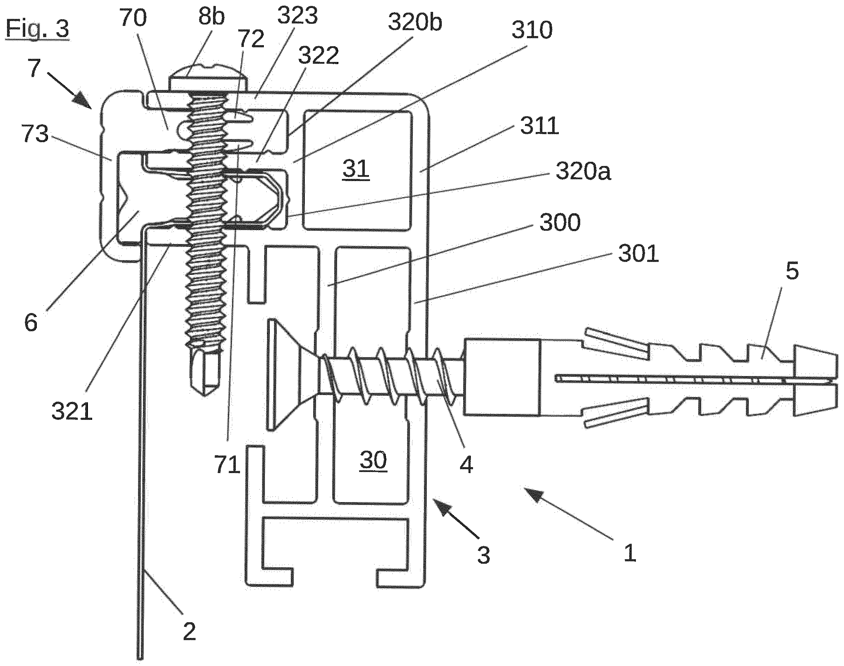

Gemäß einer zweiten Befestigungsvariante, die in Fig. 3 gezeigt ist, werden ein oder mehrere Sicherungsschrauben 8b, die vorzugsweise ebenfalls selbstbohrend ausgeführt sind und von denen in Fig. 3 nur eine zu erkennen ist, von der Seite durch die dritte Nutflanke 323, die beiden Federabschnitte 71, 72 des Eingriffsabschnitts 70 der Sicherungsleiste 7, die zweite Nutflanke 322, den Einschlagkeder 6 sowie die erste Nutflanke 321 hindurchgeführt, um den Einschlagkeder 6 mit dem von diesem eingeschlagenen Randabschnitt 20 des flexiblen Flächenelements 2 sowie die Sicherungsleiste 7 an dem Rahmenprofil 3 festzulegen. Zur Vereinfachung der Montage der mindestens einen Sicherungsschraube 8b weist die dritte Nutflanke 323 an ihrer Außenseite eine Bohrrille 324 auf, die sich vorzugsweise über die gesamte Länge der zweiten Aufnahmenut 32b erstreckt.

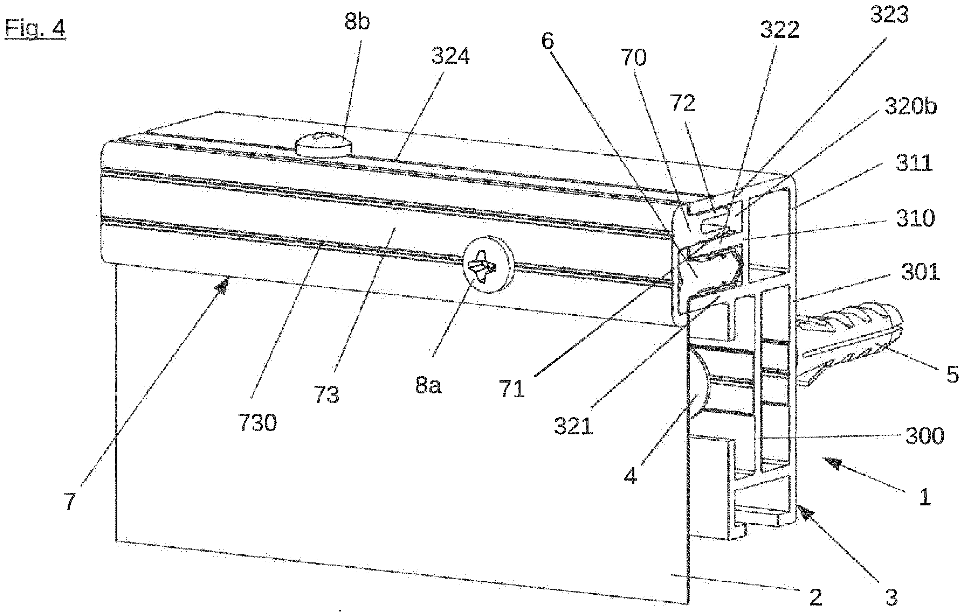

Die dritte Befestigungsvariante, die in Fig. 4 gezeigt ist, stellt eine Kombination der ersten und zweiten Befestigungsvariante dar. Das bedeutet, dass einige Sicherungsschrauben 8a von vorne durch den Abdeckabschnitt 73 der Sicherungsleiste 7, durch den Einschlagkeder 6, den Nutgrund 320a der ersten Aufnahmenut 32 und somit auch durch die erste Seitenwand 300 der ersten Hohlkammer 30 hindurchgeführt werden und einige Befestigungsschrauben 8b von der Seite durch die dritte Nutflanke 323, die beiden Federabschnitte 71, 72 des Eingriffsabschnitts 70 der Sicherungsleiste 7, die zweite Nutflanke 322, den Einschlagkeder 6 sowie die erste Nutflanke 321 hindurchgeführt werden, um den Einschlagkeder 6 und die Sicherungsleiste 7 an dem Rahmenprofil 3 festzulegen.

Bei der Montage des flexiblen Flächenelements 2 wird zunächst aus mehreren (insbesondere vier) Anschlussvorrichtungen 1 der vorstehend beschriebenen Art eine Rahmenanordnung zusammengesetzt, die mittels der Befestigungsschrauben 4 an einer Wand oder einem anderen geeigneten Tragwerk befestigt werden kann. Anschließend wird das flexible Flächenelement 2 über diese Rahmenanordnung gelegt und mittels der Einschlagkeder 6 in den ersten Aufnahmenuten 32a der jeweiligen Anschlussvorrichtungen 1 fixiert. In einem nächsten Montageschritt werden die Sicherungsleisten 7 in die zweiten Aufnahmenuten 32b der Anschlussvorrichtungen 1 eingesetzt. Die endgültige Fixierung erfolgt mittels der Befestigungsschrauben 8a, 8b gemäß den vorstehend beschriebenen Befestigungsvarianten.

Ein Vorteil der hier beschriebenen Anschlussvorrichtung 1 beziehungsweise der aus mehreren derartigen Anschlussvorrichtungen 1 gebildeten Rahmenanordnung besteht darin, dass der Einschlagkeder 6 und die Sicherungsleiste 7 jeweils durch dieselbe(n) Sicherungsschraube(n) 8a, 8b gesichert werden können. Jede der Sicherungsschrauben 8a, 8b hat eine entsprechend angepasste Länge, so dass sie sich in ihrer Montagesolllage durch zumindest eine der Profilwandungen einer der Anschlussvorrichtungen 1 erstrecken kann und damit ein optimales Festschrauben ermöglicht.

Wenn ein oder mehrere selbstbohrende Sicherungsschrauben 8a gemäß der ersten Befestigungsvariante von der Vorderseite der Rahmenanordnung aus in die jeweiligen Anschlussvorrichtungen 1 eingeschraubt werden, können mehrere Rahmenanordnungen in vorteilhafter Weise lückenlos nebeneinander montiert werden.

## Patentansprüche

1. Anschlussvorrichtung (1) zum Anschluss eines flexiblen Flächenelements (2), insbesondere eines bedruckten Textils oder einer bedruckten Plane, umfassend ein Rahmenprofil (3), das an einer Wand oder einem anderen Tragwerk festlegbar ist und zumindest eine erste Aufnahmenut (32a) aufweist, in der das flexible Flächenelement (2) an dem Rahmenprofil (3) festlegbar ist, wobei die Anschlussvorrichtung (1)
- einen Einschlagkeder (6), der so geformt ist, dass er unter Zwischenlage eines äußeren Randabschnitts (20) des flexiblen Flächenelements (2) in die erste Aufnahmenut (32a) einsetzbar ist,
- eine Sicherungsleiste (7), die so geformt ist, dass sie auf den Einschlagkeder (6) aufsetzbar ist, aufweist,
**gekennzeichnet durch**
- zumindest eine Sicherungsschraube (8a, 8b), die dazu eingerichtet ist, den Einschlagkeder (6) mit dem darin eingeschlagenen Randabschnitt (20) des flexiblen Flächenelements (2) nach dem Einsetzen in die erste Aufnahmenut (32a) sowie die Sicherungsleiste (7) nach dem Aufsetzen auf den Einschlagkeder (6) gemeinsam zu sichern, wobei das Rahmenprofil (3) eine zweite Aufnahmenut (32b) aufweist, die unmittelbar an die erste Aufnahmenut (32a) angrenzt oder von dieser beabstandet ist, und die Sicherungsleiste (7) einen Eingriffsabschnitt (70) aufweist, der so geformt ist, dass er formschlüssig in die zweite Aufnahmenut (32b) einsetzbar ist

2. Anschlussvorrichtung (1) nach Anspruch 1, **dadurch gekennzeichnet, dass** die mindestens eine Sicherungsschraube (8a, 8b) eine Länge aufweist, die so gewählt ist, dass sich die Sicherungsschraube (8a, 8b) in ihrer Montagesolllage durch die Sicherungsleiste (7), den Einschlagkeder (6), den Randabschnitt (20) des flexiblen Flächenelements (2) sowie durch mindestens eine Profilwandung des Rahmenprofils (3) hindurch erstreckt.

3. Anschlussvorrichtung (1) nach einem der Ansprüche 1 oder 2, **dadurch gekennzeichnet, dass** die mindestens eine Sicherungsschraube (8a, 8b) selbstbohrend ausgebildet ist.

4. Anschlussvorrichtung (1) nach einem der Ansprüche 1 bis 3, **dadurch gekennzeichnet, dass** sich die mindestens eine Sicherungsschraube (8a) in ihrer Montagesolllage durch einen Nutgrund (320a) der ersten Aufnahmenut (32a) hindurch erstreckt.

5. Anschlussvorrichtung (1) nach einem der vorgenannten Ansprüche, **dadurch gekennzeichnet, dass** der Eingriffsabschnitt (70) zwei voneinander beabstandete Federabschnitte (71, 72) umfasst, die so ausgebildet sind, dass sie eine Presspassung des Eingriffsabschnitts (70) in der zweiten Aufnahmenut (32b) bewirken.

6. Anschlussvorrichtung (1) nach einem der vorgenannten Ansprüche, **dadurch gekennzeichnet, dass** innerhalb der zweiten Aufnahmenut (32b) mehrere Rippen (331) ausgebildet sind, die sich vorzugsweise über die gesamte Länge der zweiten Aufnahmenut (32b) erstrecken.

7. Anschlussvorrichtung (1) nach einem der vorgenannten Ansprüche, **dadurch gekennzeichnet, dass** die beiden Aufnahmenuten (32a, 32b) Nutflanken (32, 322, 323) aufweisen, durch die sich die mindestens eine Sicherungsschraube (8a, 8b) in ihrer Montagesolllage hindurch erstreckt.

8. Anschlussvorrichtung (1) nach einem der Ansprüche 1 bis 6, **dadurch gekennzeichnet, dass** innerhalb der ersten Aufnahmenut (32a) mehrere Rippen (330) ausgebildet sind, die sich vorzugsweise über die gesamte Länge der ersten Aufnahmenut (32a) erstrecken.

9. Rahmenanordnung zum Anschluss eines flexiblen Flächenelements (2), insbesondere eines bedruckten Textils oder einer bedruckten Plane, umfassend eine Mehrzahl miteinander verbundener Anschlussvorrichtungen (1), **dadurch gekennzeichnet, dass** die Anschlussvorrichtungen (1) nach einem der Ansprüche 1 bis 8 ausgeführt sind.

## Claims

1. Connection device (1) for attachment of a flexible surface element (2), in particular of a printed textile or a printed canvas, comprising a frame profile (3), which is attachable to a wall or another support structure and has at least one receiving groove (32a), in which the flexible surface element (2) is attachable to the frame profile (3), wherein the connection device (1)
- has a keder (6), which is formed in such a manner that it can be inserted in the first receiving groove (32a) with the interposition of an outer edge portion (20) of the flexible surface element (2),
- a securing strip (7), which is formed in a manner that it can be placed on the keder (6),
**characterised by**
- at least one locking screw (8a, 8b), which is adapted to jointly secure the keder (6) with the edge portion (20) of the flexible surface element (2) driven into it after insertion into the first receiving groove (32a) as well as the securing strip (7) after placement on the keder (6),
wherein the frame profile (3) has a second receiving groove (32b), which is immediately adjacent to the first receiving groove (32a) or is spaced apart from it, and the securing strip (7) has an engaging portion (70), which is formed in such a manner that it can be form-fittingly inserted into the second receiving groove (32b).

2. Connection device (1) according to claim 1, **characterised in that** the at least one locking screw (8a, 8b) has a length which is selected in such a manner that the locking screw (8a, 8b) in its desired assembly position extends through the securing strip (7), the keder (6), the edge portion (20) of the flexible surface element (2) as well as through at least one profile wall of the frame profile (3).

3. Connection device (1) according to one of claims 1 or 2, **characterised in that** the at least one locking screw (8a, 8b) is designed so as to be self-drilling.

4. Connection device (1) according to one of claims 1 to 3, **characterised in that** the at least one locking screw (8a) in its desired assembly position extends through a groove base (320a) of the first receiving groove (32a).

5. Connection device (1) according to one of the previous claims, **characterised in that** the engaging portion (70) comprises two spaced-apart spring portions (71, 72), which are designed in such a manner that they provide a press fit of the engaging portion (70) in the second receiving groove (32b).

6. Connection device (1) according to one of the previous claims, **characterised in that** within the second receiving groove (32b) several ribs (331) are formed, which preferably extend over the entire length of the second receiving groove (32b).

7. Connection device (1) according to one of the previous claims, **characterised in that** the two receiving grooves (32a, 32b) have groove flanks (32, 322, 323), through which the at least one locking screw (8a, 8b) extends in its desired assembly position.

8. Connection device (1) according to one of claims 1 to 6, **characterised in that** within the first receiving groove (32a) several ribs (330) are formed, which preferably extend over the entire length of the first receiving groove (32a).

9. Frame arrangement for connecting a flexible surface element (2), in particular of a printed textile or a printed canvas, comprising a plurality of connected connection devices (1), **characterised in that** the connection devices (1) are designed according to one of claims 1 to 8.

## Revendications

1. Dispositif de raccordement (1) permettant de raccorder un élément de surface (2) flexible, en particulier un textile imprimé ou une bâche imprimée, comprenant un profilé (3) de châssis pouvant être fixé contre un mur ou un autre ouvrage porteur et présentant au moins une première gorge réceptacle (32a) dans laquelle l'élément de surface (2) flexible peut être fixé contre le profilé (3) de châssis, sachant que le dispositif de raccordement (1)
- présente un jonc à enfoncer (6) dont la forme est telle qu'il est possible de l'introduire dans la première gorge réceptacle (32a) en intercalant un segment marginal (20) externe de l'élément de surface (2) flexible,
- présente un bandeau de sécurisation (7) d'une forme telle qu'il est possible de le poser sur le jonc à enfoncer (6),
**caractérisé par**
- au moins une vis de sécurisation (8a, 8b) ajustée pour sécuriser ensemble le jonc à enfoncer (6) avec le segment marginal (20), enfoncé dedans, de l'élément de surface (2) flexible après l'introduction dans la première gorge réceptacle (32a), ainsi que le bandeau de sécurisation (7) après la pose sur le jonc à enfoncer (6),
sachant que le profilé (3) de châssis présente une seconde gorge réceptacle (32b) directement limitrophe de la première gorge réceptacle (32a) ou à distance de cette dernière, et que le bandeau de sécurisation (7) présente un segment d'engrènement (70) d'une forme telle qu'il soit possible de l'introduire par adhérence de formes dans la seconde gorge réceptacle (32b).

2. Dispositif de raccordement (1) selon la revendication 1, **caractérisé en ce qu'**au moins une vis de sécurisation (8a, 8b) présente une longueur choisie de sorte que la vis de sécurisation (8a, 8b) traverse complètement, lorsqu'en position de montage de consigne, le bandeau de sécurisation (7), le jonc à enfoncer (6), le segment marginal (20) de l'élément de surface (2) flexible ainsi qu'au moins une paroi du profilé (3) de châssis.

3. Dispositif de raccordement (1) selon l'une des revendications 1 ou 2, **caractérisé en ce qu'**au moins une vis de sécurisation (8a, 8b) est configurée autoforeuse.

4. Dispositif de raccordement (1) selon l'une des revendications 1 à 3, **caractérisé en ce qu'**au moins une vis de sécurisation (8a) traverse complètement, lorsqu'en position de montage de consigne, un fond (320a) de la première gorge réceptacle (32a).

5. Dispositif de raccordement (1) selon l'une des revendications précédentes, **caractérisé en ce que** le segment d'engrènement (70) comprend deux segments (71, 72) à ressort distants l'un de l'autre et configurés de telle sorte qu'ils provoquent un ajustage serti du segment d'engrènement (70) dans la seconde gorge réceptacle (32b).

6. Dispositif de raccordement (1) selon l'une des revendications précédentes, **caractérisé en ce qu'**à l'intérieur de la deuxième gorge réceptacle (32b) sont configurées plusieurs nervures (331) qui s'étendent de préférence sur toute la longueur de la deuxième gorge réceptacle (32b).

7. Dispositif de raccordement (1) selon l'une des revendications précédentes, **caractérisé en ce que** les deux gorges réceptacles (32a, 32b) présentent des flancs (32, 322, 323) traversés complètement par au moins une vis de sécurisation (8a, 8b) lorsque cette dernière est sur sa position de montage de consigne.

8. Dispositif de raccordement (1) selon l'une des revendications 1 à 6, **caractérisé en ce qu'**à l'intérieur de la première gorge réceptacle (32a) sont configurées plusieurs nervures (330) qui s'étendent de préférence sur toute la longueur de la première gorge réceptacle (32a).

9. Agencement de châssis permettant de raccorder un élément de surface (2) flexible, notamment un textile imprimé ou une bâche imprimée, comprenant une pluralité de dispositifs de raccordement (1) reliés entre eux, **caractérisé en ce que** les dispositifs de raccordement (1) sont réalisés selon l'une des revendications 1 à 8.
